# EUROPEAN PATENT SPECIFICATION

(11) **EP 2 963 794 B1**
(45) Date of publication and mention of the grant of the patent: **19.09.2018**
(21) Application number: 15170371.7
(22) Date of filing: 03.06.2015
(51) Int. Cl.: H02M 1/32, H02M 1/36, H02H 7/10, H02M 7/53846, H02M 7/5387, H02M 1/00

(54) **SYSTEM INTERCONNECTION DEVICE FOR DECENTRALIZED POWER SUPPLY**
SYSTEMZWISCHENVERBINDUNGSVORRICHTUNG FÜR EINE DEZENTRALISIERTE STROMVERSORGUNG
DISPOSITIF D'INTERCONNEXION DE SYSTÈME POUR ALIMENTATION DÉCENTRALISÉE

(30) Priority: 30.06.2014 JP 2014134389
(43) Date of publication of application: 06.01.2016
(73) Proprietor: AISIN SEIKI KABUSHIKI KAISHA, Kariya-shi, Aichi 448-8650 (JP)
(72) Inventor: YAI, Katsunori, Kariya-shi, Aichi 448-8650 (JP); NAOI, Norihiro, Kariya-shi, Aichi 448-8650 (JP)
(74) Representative: TBK

(56) References cited:
- EP-A2- 1 107 439
- EP-A2- 1 143 594
- US-A1- 2011 249 475

## Description

### TECHNICAL FIELD

This disclosure generally relates to a system interconnection device for a decentralized power supply, and specifically relates to a protection control when an abnormality occurs at the system interconnection device for the decentralized power supply.

### BACKGROUND

An example of a known system interconnection device for a decentralized power supply is disclosed in JP2013-212026A (hereinafter referred to as Patent reference 1). A protection control device disclosed in Patent reference 1 includes at least one of a first abnormality detection means detecting an abnormality of an analog-to-digital converter and a second abnormality detection means detecting an abnormality of a control circuit. The protection control device disclosed in Patent reference 1 includes an internal monitoring circuit serving as the second abnormality detection means being positioned inside the control circuit, the internal monitoring circuit monitoring the operation of the control circuit. The control circuit controls the execution of the protection operation when detecting an abnormality of the operation of the control circuit via the internal monitoring circuit.

The protection control device disclosed in Patent reference 1 includes an external monitoring circuit serving as the second abnormality detection means being positioned outside the control circuit, the external monitoring circuit monitoring the operation of the control circuit. The external monitoring circuit controls the execution of the protection operation instead of the control circuit when detecting the abnormality of the operation of the control circuit. According to Patent reference 1, the protection operation corresponds to a shutdown of an inverter and an opening of a switch or a circuit breaker provided in a system.

However, according to Patent reference 1, the external monitoring circuit controls the execution of the protection operation instead of the control circuit when detecting the abnormality of the operation of the control circuit. Thus, in a case where the protection operation is not executed by the external monitoring circuit, there is no means that executes the protection operation instead of the internal monitoring circuit. Accordingly, the protection control operated by the protection control device disclosed in Patent reference 1 may be insufficient.

Particularly, when the abnormality occurs at an arithmetical unit (that corresponds to the control circuit disclosed in Patent reference 1) that controls the system interconnection device for the decentralized power supply, the system interconnection device for the decentralized power supply is desired to promptly release the interconnection of a power generation device and the system power supply for guaranteeing the security. Further, in order to enhance the reliability of the system interconnection device for the decentralized power supply, the system interconnection device favorably serves as a redundant system that includes plural means that release the interconnection of the power generation device and the system power supply.

Further background art is known from the document US 2011/0249475 A1 which discloses a grid-connected inverter (i.e. a system interconnection device for interconnecting a solar cell as a power generation device and a commercial power system as a system power supply) including first and second power conversion circuits, a contactor and a control circuit. The first conversion circuit converts a first DC voltage to a second DC voltage. The second conversion circuit converts the second DC voltage to an AC voltage. The contactor connects an output side of the second conversion circuit to a power system. The control circuit includes a decision circuit and controls start and stop operations of the conversion circuits, and opening and closing of the contactor. The decision circuit decides whether a condition of the contactor is abnormal by detecting, after the control circuit controls the contactor to be open, whether or not a value of the second DC voltage is less than a threshold value, and if the value of the second DC voltage is detected to be not less than the threshold value, decides that the condition of the contactor is abnormal.

A need thus exists for a system interconnection device for a decentralized power supply that reduces time for releasing an interconnection of a power generation device and a system power supply when an abnormality occurs at an arithmetical device of a control device controlling the system interconnection device for the decentralized power supply and that includes plural means that release the interconnection of the power generation device and the system power supply.

### SUMMARY

According to the present invention, there is provided a system interconnection device, as defined in the claims.

According to an aspect of this disclosure, a system interconnection device for a decentralized power supply includes a power generation device generating a direct-current power, an alternating-current system power supply, a power converter being positioned between the power generation device and the system power supply, the power converter converting the direct-current power generated by the power generation device into an alternating-current power and outputs the alternating-current power to the system power supply, an electric circuit connecting the power converter and the system power supply, a switch being provided at the electric circuit, the switch switchable to an open state where the electric circuit is disconnected, the switch switchable to a closed state where the electric circuit is conductive, a switch driving circuit switching the switch to the open state and to the closed state, a control unit including an arithmetic device, the control unit generating an opening command for making the switch be in the open state by the arithmetic device, the control unit generating a closing command for making the switch be in the closed state by the arithmetic device, the control unit outputting the opening command or the closing command to the switch driving circuit by the arithmetic device and an external monitoring device being separately provided outside the arithmetic device of the control unit, the external monitoring device monitoring an abnormality of the arithmetic device. When detecting the abnormality of the arithmetic device of the control unit, the external monitoring device generates a first opening command for making the switch be in the open state, the external monitoring device outputs the first opening command to the switch driving circuit and the external monitoring device restarts the arithmetic device of the control unit. The restarted arithmetic device of the control unit generates a second opening command for making the switch be in the open state, and the arithmetic device outputs the second opening command to the switch driving circuit. The switch driving circuit maintains the switch in the open state while receiving at least one of the first opening command and the second opening command.
According to the system interconnection device for the decentralized power supply, when the abnormality occurs at the arithmetic device of the control device, the switch driving circuit maintains the switch in the open state on the basis of the first opening command outputted with a command for restarting the arithmetic device. Accordingly, the interconnection of the generation device and the system power supply can be released. Thus, the switch driving circuit can release the interconnection of the power generation device and the system power supply before receiving the second opening command generated by the restarted arithmetic device. Comparing to a case where the release of the interconnection is operated on the basis of the second opening command only, time for releasing the interconnection may be reduced. When the abnormality of the arithmetic device of the control device occurs, the switch driving circuit releases the interconnection of the power generation device and the system power supply by at least one of the first and second opening commands. Thus, in a case where the switch driving circuit cannot receive one of the opening commands, the switch driving circuit can release the interconnection of the power generation device and the system power supply by receiving the other opening command. That is, the system interconnection device for the decentralized power supply serves as a redundant system that includes plural means for releasing the interconnection when the abnormality occurs at the arithmetical device of the control unit. Thus, the reliability is enhanced.

According to another aspect of this disclosure, the control unit continuously transmits a constant rectangular wave signal to the external monitoring device, the constant rectangular wave signal indicating that the arithmetic device of the control unit is normally operated. The external monitoring device determines that the abnormality of the arithmetic device of the control unit is detected when at least one of a frequency of the rectangular wave signal received from the control unit and a duty ratio of the rectangular wave signal received from the control unit is out of a preset reference range.

According to the system interconnection device for the decentralized power supply, the external monitoring device detects the abnormality of the arithmetic device of the control device on the basis of at least one of the frequency of the rectangular wave signal received from the control unit and the duty ratio of the rectangular wave signal received from the control unit. Comparing to a case where the abnormality of the arithmetic device is detected by whether the external monitoring device receives the rectangular wave signal from the control unit within the predetermined time, the detection accuracy of the abnormality of the arithmetic device may be enhanced.

According to still further aspect of this disclosure, the control unit includes an internal monitoring device being positioned inside the arithmetic device, the internal monitoring device monitoring the abnormality of the arithmetic device of the control unit. When detecting the abnormality of the arithmetic device of the control unit, the internal monitoring device generates a third opening command for making the switch be in the open state, the internal monitoring device outputs the third opening command to the switch driving circuit, and the internal monitoring device restarts the arithmetic device of the control unit in a state where the external monitoring device does not restart the arithmetic device of the control unit. The switch driving circuit maintains the switch in the open state while receiving at least one of the first opening command, the second opening command and the third opening command.

According to the system interconnection device for the decentralized power supply, the internal monitoring device restarts the arithmetic device of the control unit in a case where the external monitoring device does not restart the arithmetic device of the control unit. When the abnormality occurs at the arithmetic device of the control unit, the switch driving circuit can release the interconnection of the power generation device and the system power supply by the third opening command generated by the internal monitoring device in addition to the first and second opening commands. That is, the system interconnection device for the decentralized power supply serves as a redundant system that includes three means for releasing the interconnection when the abnormality occurs at the arithmetical device of the control unit. Thus, the reliability is enhanced.

According to still another aspect of this disclosure, each of the internal monitoring device and the external monitoring device includes a timer portion, an abnormality determination portion and a command output portion.

The internal monitoring device includes a control block that is the same or substantially the same as the control block of the external monitoring device. The timer portion corresponds to a known timer and measures a predetermined time (a constant time) repeatedly. When the abnormality determination portion of the internal monitoring device detects the abnormality of the arithmetic device of the control unit and when the external monitoring device does not restart the arithmetic device of the control unit, the command output portion of the internal monitoring device restarts the arithmetic device of the control unit. When the abnormality determination portion of the internal monitoring device detects the abnormality of the arithmetic device of the control unit, the command output portion of the internal monitoring device generates the third opening command and outputs the third opening command to the switch driving circuit. In particular, when the abnormality of the arithmetic device of the control device is detected, the command output portion of the internal monitoring device outputs the low level of the voltage from a third switch control terminal.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating an example of a system interconnection device for a decentralized power supply according to an embodiment disclosed here;
Fig. 2 is a connection wiring diagram illustrating an example of a connection wiring of an arithmetical device, an internal monitoring device, a switch driving circuit and an external monitoring device;
Fig. 3 is a block diagram illustrating an example of a control block of the system interconnection device for the decentralized power supply;
Fig. 4 is a flowchart illustrating an example of a process for detecting an abnormality of the arithmetical device, the process executed by the external monitoring device; and
Fig. 5 is a timing chart illustrating an example of the relationship of a rectangular wave signal, reset signals, a switch control signal, gate input signals and an open state and a closed state of a first parallel-off relay and a second parallel-off relay.

### DETAILED DESCRIPTION

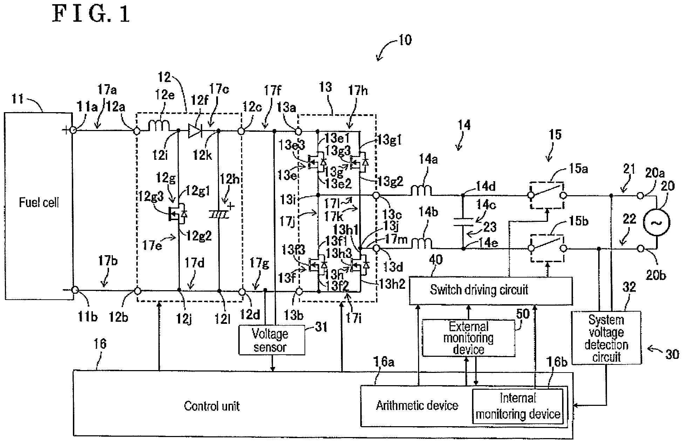

A system interconnection device 10 for a decentralized power supply of an embodiment will hereunder be explained, The system interconnection device 10 for the decentralized power supply of the embodiment interconnects and releases an interconnection of a fuel cell 11 (i.e., serving as a power generation device) and an alternating-current system power supply 20 or an A/C power supply 20. As shown in Fig. 1, the system interconnection device 10 for the decentralized power supply includes the fuel cell 11, a converter 12, an inverter 13 (i.e., serving as a power converter), a smoothing circuit 14, parallel-off relays 15 (i.e., serving as a switch), a control unit 16, a system power supply 20, sensors 30, a switch driving circuit 40 and an external monitoring device 50.

The fuel cell 11 serves as the power generation device generating a direct-current power or a DC power. The fuel cell 11 can be various fuel cells (for example, a known solid oxide fuel cell or a known SOFC). The power generation device can be other power generation devices (for example, a solar cell or a gasoline engine) that generate the DC power instead of the fuel cell 11. That is, the power generation device smoothens an alternating-current power or an AC power generated by an AC power generator by a smoothing circuit and generates the DC power. The fuel cell 11 includes output terminals 11a, 11b. The output terminal 11a is connected to a cathode of the fuel cell 11. The output terminal 11b is connected to an anode of the fuel cell 11.

The converter 12 boosts the DC power outputted from the fuel cell 11 and outputs the DC power to the inverter 13. The converter 12 includes input terminals 12a, 12b and output terminals 12c, 12d. An electric circuit 17a is provided between the output terminal 11a of the fuel cell 11 and the input terminal 12a of the converter 12. An electric circuit 17b is provided between the output terminal 11b of the fuel cell 11 and the input terminal 12b of the converter 12. The DC power outputted from the fuel cell 11 is inputted to the converter 12 via the electric circuits 17a, 17b. The DC power boosted by the converter 12 is outputted from the output terminals 12c, 12d. The electric circuits 17a, 17b can be formed by a known power electric wire. Electric circuits described hereunder can be formed by the known power electric wire.

The converter 12 includes a reactor 12e, a diode 12f, a switching element 12g and a condenser 12h. The reactor 12e, the diode 12f, the switching element 12g and the condenser 12h can be known electrical power devices. The switching element 12g can be, for example, a known field effect transistor or a known FET, or, a known insulated gate bipolar transistor or a known IGBT. The condenser 12h can be a known electrolytic condenser.

An electric circuit 17c is provided between the input terminal 12a and the output terminal 12c of the converter 12. An electric circuit 17d is provided between the input terminal 12b and the output terminal 12d of the converter 12. The electric circuit 17c is provided with the reactor 12e and the diode 12f that are positioned in the aforementioned order from a direction of the input terminal 12a. The electric circuit 17c positioned between the reactor 12e and the diode 12f includes a connection point 12i that is connected to a drain 12g1 of the switching element 12g. A source 12g2 of the switching element 12g is connected to a connection point 12j provided at the electric circuit 17d. An electric circuit 17e is provided between the connection point 12i and the connection point 12j. A gate 12g3 of the switching element 12g is connected to the control unit 16 via a driving circuit (driver circuit).

The electric circuit 17c positioned between the diode 12f and the output terminal 12c is provided with a connection point 12k that is connected to a first end (a cathode) of the condenser 12h. A second end (an anode) of the condenser 12h is connected to a connection point 12l provided at the electric circuit 17d. The configuration of the converter 12 is not limited to the aforementioned configuration as long as being able to boost the DC power that is outputted from the fuel cell 11.

An electric circuit 17f is provided between the output terminal 12c of the converter 12 and an input terminal 13a of the inverter 13. An electric circuit 17g is provided between the output terminal 12d of the converter 12 and an input terminal 13b of the inverter 13. A voltage sensor 31 measuring the output voltage (the DC voltage) of the converter 12 is provided between the electric circuit 17f and the electric circuit 17g.

For example, the voltage sensor 31 divides the DC voltage generated between the electric circuit 17f and the electric circuit 17g by a resistor having a known resistance value. The output voltage (DC voltage) of the converter 12 can be calculated on the basis of the divided voltage values. The DC voltage divided by the resistor is inputted to the control unit 16 that then calculates the output voltage (the DC voltage) of the converter 12.

The control unit 16 determines a duty ratio of a pulse signal on the basis of the output voltage (the DC voltage) of the converter 12. The control unit 16 applies the pulse signal that is based on the duty ratio to the gate 12g3 of the switching element 12g via the driving circuit (the driver circuit). In a case where a voltage applied to the gate 12g3 of the switching element 12g is at a high level (Hi), the drain 12g1 and the source 12g2 of the switching element 12g come to be in a conducted state. Accordingly, an electromagnetic energy is stored in the reactor 12e.

When a voltage applied to the gate 12g3 of the switching element 12g is at a low level (Lo), the drain 12g1 and the source 12g2 of the switching element 12g are disconnected to be in an open state. An electromagnetic energy stored in the reactor 12e is charged in the condenser 12h. The output voltage (the DC voltage) of the converter 12 increases. As such, the control unit 16 can control a desired voltage value of the output voltage (the DC voltage) of the converter 12. The control unit 16 can perform a variable control on the output voltage (the DC voltage) of the converter 12 by a pulse amplitude modulation system or by a PAM system.

The inverter 13 is positioned between the fuel cell 11 and the system power supply 20. The inverter 13 converts the DC voltage generated by the fuel cell 11 into the AC power and outputs the AC power to the system power supply 20. The inverter 13 includes the input terminals 13a, 13b and output terminals 13c, 13d. According to the embodiment, the inverter 13 is connected to the fuel cell 11 via the converter 12. However, in a case where the power generation device can output the desired DC voltage, the converter 12 does not have to be provided.

An electric circuit 21 is provided between the output terminal 13c of the inverter 13 and a connection terminal 20a of the system power supply 20. An electric circuit 22 is provided between the output terminal 13d of the inverter 13 and a connection terminal 20b of the system power supply 20. The AC power outputted from the inverter 13 is outputted to the system power supply 20 via the electric circuits 21, 22. The system power supply 20 corresponds to a power supply supplied via a commercial distribution line network possessed by an electric power company. The system power supply 20 is not limited to a single-phase power supply and may be a multi-phase (for example, a three-phase) system power supply,

The inverter 13 includes a first switching element 13e, a second switching element 13f, a third switching element 13g, and a fourth switching element 13h. Similarly to the switching element 12g of the converter 12, the first, second, third and fourth switching elements 13e, 13f, 13g, 13h can be the known FET or the known IGBT. As shown in Fig. 1, the first, second, third and fourth switching elements 13e, 13f, 13g, 13h include reflux diodes, respectively. The circulating current diode can be a body diode (a parasitic diode) of the switching element. The circulating current diode can be separately provided and can be connected to the switching element in parallel.

As shown in Fig. 1, an electric circuit 17h is provided between the input terminal 13a of the inverter 13, a drain 13e1 of the first switching element 13e and a drain 13g1 of the third switching element 13g. An electric circuit 17i is provided between the input terminal 13b of the inverter 13, a source 13f2 of the second switch element 13f and a source 13h2 of the fourth switching element 13h.

The first and second switching elements 13e, 13f are connected in series between the electric circuits 17h, 17i. An electric circuit 17j is provided between a source 13e2 of the first switching element 13e and a drain 13f1 of the second switching element 13f. The third and fourth switching elements 13g, 13h are connected in series between the electric circuits 17h, 17i. An electric circuit 17k is provided between a source 13g2 of the third switching element 13g and a drain 13h1 of the fourth switching element 13h. That is, the first and second switching elements 13e, 13f that are connected in series and the third and fourth switching elements 13g, 13h that are connected in series are connected in parallel between the electric circuits 17h, 17i.

A connection point 13i is provided at the electric circuit 17j. An electric circuit 17l is positioned between the connection point 13i and the output terminal 13c of the inverter 13. A connection point 13j is provided at the electric circuit 17k. An electric circuit 17m is positioned between the connection point 13j and the output terminal 13d of the inverter 13. As above, the first, second, third and fourth switching elements 13e, 13f, 13g, 13h are connected to one another by a full-bridge connection.

First, second, third and fourth gates 13e3, 13f3, 13g3, 13h3 of the first, second, third and fourth switching elements 13e, 13f, 13g, 13h, respectively, are connected to the control unit 16 via driving circuits (driver circuit). The first, second, third and fourth switching elements 13e, 13f, 13g, 13h are controlled to be open and closed in accordance with driving signals outputted from the control unit 16. For example, when the voltage applied to the gate 13e3 of the first switching element 13e is at the high level (Hi), the drain 13e1 and the source 13e2 of the first switching element 13e come to be in the conducted state. When the voltage applied to the gate 13h3 of the fourth switching element 13h is at the high level (Hi), the drain 13h1 and the source 13h2 of the fourth switching element 13h come to be in the conducted state.

At this time, a low level (Lo) voltage is applied to the gate 13f3 of the second switching element 13f. The drain 13f1 and the source 13f2 of the second switching element 13f are disconnected to be in the open state. A low level (Lo) voltage is applied to the gate 13g3 of the third switching element 13g. The drain 13g1 and the source 13g2 of the third switching element 13g are disconnected to be in the open state. In such a case, the DC current outputted from the converter 12 flows in the input terminal 13a of the inverter 13, the electric circuit 17h, the first switching element 13e, the electric circuit 17j, the connection point 13i, the electric circuit 171, the output terminal 13c of the inverter 13, the electric circuit 21, the system power supply 20, the electric circuit 22, the output terminal 13d of the inverter 13, the electric circuit 17m, the connection point 13j, the electric circuit 17k, the fourth switching element 13h, the electric circuit 17i and the input terminal 13b of the inverter 13 in the aforementioned order. The states of the first, second, third and fourth switching elements 13e, 13f, 13g, 13h are referred to as a first state.

Next, a low level (Lo) voltage is applied to the gate 13e3 of the first switching element 13e. The drain 13e1 and the source 13e2 of the first switching element 13e are disconnected to be in the open state. A low level (Lo) voltage is applied to the gate 13h3 of the fourth switching element 13h. The drain 13h1 and the source 13h2 of the fourth switching element 13h are disconnected to be in the open state.

At this time, a high level (Hi) voltage is applied to the gate 13f3 of the second switching element 13f. The drain 13f1 and the source 13f2 of the second switching element 13f come to be in the conducted state. A high level (Hi) voltage is applied to the gate 13g3 of the third switching element 13g. The drain 13g1 and the source 13g2 of the third switching element 13g come to be in the conducted state. In such a case, the DC current outputted from the converter 12 flows in the input terminal 13a of the inverter 13, the electric circuit 17h, the third switching element 13g, the electric circuit 17k, the connection point 13j, the electric circuit 17m, the output terminal 13d of the inverter 13, the electric circuit 22, the system power supply 20, the electric circuit 21, the output terminal 13c of the inverter 13, the electric circuit 171, the connection point 13i, the electric circuit 17j, the second switching element 13f, the electric circuit 17i, the input terminal 13b of the inverter 13 in the aforementioned order. The states of the first, second, third and fourth switching elements 13e, 13f, 13g, 13h are referred to as a second state.

Directions of the electric current flowing in the electric circuits 21, 22 in the second state correspond to directions opposite to the directions of the electric current flowing in the electric circuits 21, 22 in the first state. As such, because the first state and the second state are repeated in order, the inverter 13 can convert the DC power inputted from the input terminals 13a, 13b of the inverter 13 into the AC power. The control unit 16 can perform various opening and closing controls. For example, the control unit 16 can change a duty ratio by a pulse width module system or a PWM system and can control a conduction time and a disconnected time of the first, second, third and fourth switching elements 13e, 13f, 13g, 13h on the basis of the duty ratio.

The plural (two, in the embodiment) electric circuits 21, 22 that connect the inverter 13 and the system power supply 20 include the smoothing circuit 14 and the parallel-off relays 15. The smoothing circuit 14 removes a high-frequency component of the AC power outputted from the output terminals 13c, 13d of the inverter 13 and reshapes an output voltage of the inverter 13 into a voltage having waveform of sine wave. Then, the smoothing circuit 14 outputs the output voltage of the inverter 13 to the system power supply 20. The parallel-off relays 15 serve as switches interconnecting and releasing the interconnection of the fuel cell 11 that serves as the power generation device and the system power supply 20. The supply of the power is controlled by the control unit 16 that controls the parallel-off relays 15 to be open or closed.

The smoothing circuit 14 includes reactors 14a, 14b and a condenser 14c. The parallel-off relays 15 are configured with a first parallel-off relay 15a and a second parallel-off relay 15b. The reactors 14a, 14b, the condenser 14c and the first and second parallel-off relays 15a, 15b can be known electrical power devices. The electric circuit 21 includes the reactor 14a and the first parallel-off relay 15a that are positioned in the aforementioned order from a direction of the output terminal 13c of the inverter 13. The electric circuit 22 includes the reactor 14b and the second parallel-off relay 15b that are positioned in the aforementioned order from a direction of the output terminal 13d of the inverter 13.

The electric circuit 21 that is positioned between the reactor 14a and the first parallel-off relay 15a is provided with a connection point 14d. The connection point 14d is connected to a first end of the condenser 14c. The electric circuit 22 that is positioned between the reactor 14b and the second parallel-off relay 15b is provided with a connection point 14e. The connection point 14e is connected to a second end of the condenser 14c. As described above, because the power outputted from the inverter 13 corresponds to the AC power, an electric circuit 23 is provided between the connection points 14d, 14e.

The configuration of the smoothing circuit 14 is not limited to the aforementioned configuration as long as the output voltage of the inverter 13 can be reshaped into a voltage having the waveform of sine wave. The switch driving circuit 40 switches the first and second parallel-off relays 15a, 15b to be in the open state or a closed state. Here, the open state corresponds to a state where the plural electric circuits 21, 22 (two, in the embodiment) are in the disconnected state. The closed state corresponds to a state where the plural electric circuits 21, 22 (two, in the embodiment) are in a conductive state.

When the first and second parallel-off relays 15a, 15b come to be in the open state, the interconnection of the fuel cell 11 serving as the power generation device and the system power supply 20 is released. When the first and second parallel-off relays 15a, 15b come to be in the closed state, the fuel cell 11 serving as the power generation device and the system power supply 20 are interconnected. As such, because the parallel-off relays 15 are open and closed, the interconnection of the fuel cell 11 serving as the power generation device and the system power supply 20 is established or released.

The system interconnection device 10 for the decentralized power supply includes the sensors 30. The sensors 30 include the voltage sensor 31, a system voltage detection circuit 32 and an electric current sensor. Each of the electric circuits 21, 22 is connected to the system voltage detection circuit 32 that detects the system voltage (the voltages of the electric circuits 21, 22). A transformer reduces the system voltage that is then detected by the system voltage detection circuit 32. Detection signals of the system power detection circuit 32 are inputted to the control unit 16 that then detects an abnormality (for example, an outage) of the system power supply 20 on the basis of the detected voltage value.

The electric circuits 21, 22 can be provided with the electric current sensor (for example, a current transformer type, or a shunt type) that detects the electric current flowing in the electric circuits 21, 22. The control unit 16 detects the abnormalities of the converter 12 and the inverter 13 on the basis of detection results of the electric current sensor and the voltage sensor 31. The sensors 30 are not limited to the voltage sensor 31, the system voltage detection circuit 32 and the electric current sensor and may be various sensors that are used for the system interconnection device 10 for the decentralized power supply.

The control unit 16 at least controls the parallel-off relays 15 to be open and closed by the use of an arithmetical device 16a, The control unit 16 includes the known arithmetical device 16a, The arithmetical device 16a includes a central processing unit or a CPU, a memory device that is readable and writable (Random Access Memory or a RAM), a Read Only Memory or a ROM, and an input/output interface or an I/O interface. The CPU, the RAM, the ROM and the I.O interface are connected to one another via buses.

The arithmetical device 16a receives detection results of the sensors 30 and controls the converter 12 and the inverter 13. The arithmetical device 16a generates an opening command and a closing command and outputs the opening command and the closing command to the switch driving circuit 40. Here, the opening command corresponds to a command that opens each of the plural switches (the first and second parallel-off relays 15a, 15b). The closing command corresponds to a command that closes each of the plural switches (the first and second parallel-off relays 15a, 15b). By outputting the opening and closing commands to the switch driving circuit 40, the control unit 16 can control the plural switches (the first and second parallel-off relays 15a, 15b) to be open and closed via the switch driving circuit 40.

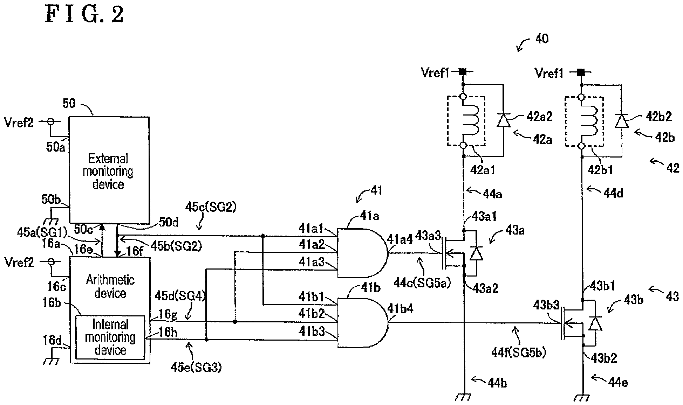

The switch driving circuit 40 switches the open state and the closed state of the plural switches (the first and second parallel-off relays 15a, 15b). As shown in Fig. 2, the switch driving circuit 40 includes a logic circuit 41, an excitation circuit 42 and a switching element 43. The logic circuit 41 includes a first logic circuit 41a and a second logic circuit 41b. The first and second logic circuits 41a, 41b output a logical conjunction of three inputs, respectively. Specifically, the first logic circuit 41a includes a first input terminal 41a1, a second input terminal 41a2 and a third input terminal 41a3 and a first output terminal 41a4. When the voltage inputted to the first, second and third input terminals 41a1, 41a2, 41a3 is at a high level (Hi), the first logic circuit 41a outputs the high level (Hi) voltage to the first output terminal 41a4. On the other hand, when at least one of the voltages inputted to the first, second and third input terminals 41a1, 41a2, 41a3 is at a low level (Lo), the first logic circuit 41a outputs the low level (Lo) voltage to the first output terminal 41a4.

Similarly, the second logic circuit 41b includes a first input terminal 41b1, a second input terminal 41b2 and a third input terminal 41b3 and a second output terminal 41b4. When the voltage inputted to the first, second and third input terminals 41b1, 41b2, 41b3 is at a high level (Hi), the second logic circuit 41b outputs the high level (Hi) voltage to the second output terminal 41b4. On the other hand, when at least one of the voltages inputted to the first, second and third input terminals 41b1, 41b2, 41b3 is at a low level (Lo), the second logic circuit 41b outputs the low level (Lo) voltage to the second output terminal 41b4.

The excitation circuit 42 includes a first excitation circuit 42a and a second excitation circuit 42b. The first excitation circuit 42a includes a first solenoid 42a1 and a first circulating current diode 42a2 that are connected in parallel. The first solenoid 42a1 serves as an excitation coil exciting the first parallel-off relay 15a. The first circulating current diode 42a2 reduces a counter-electromotive force that is generated in the first solenoid 42a1. In particular, the first circulating current diode 42a2 circulates the electric current flowing in the first solenoid 42a1 to a first power supply Vref1 when the counter-electromotive force is generated.

Similarly, the second excitation circuit 42b includes a second solenoid 42b1 and a second circulating current diode 42b2 that are connected in parallel. The second solenoid 42b1 serves as an excitation coil that excites the second parallel-off relay 15b. The second circulating current diode 42b2 reduces a counter-electromotive force that is generated in the second solenoid 42b1. In particular, the second circulating current diode 42b2 circulates the electric current flowing in the second solenoid 42b1 to the first power supply Vref1 when the counter-electromotive force is generated. The first power supply Vref1 can be generated by, for example, the transformer that reduces the voltage of the output voltage (the DC voltage) of the converter 12.

The switching element 43 includes a first switching element 43a and a second switching element 43b. Similarly to a known switching element, the first and second switching elements 43a, 43b can be the known FET or the known IGBT. Similarly to the known switching element, the first and second switching elements 43a, 43b include reflux diodes, respectively.

An electric circuit 44a is provided between the first switching element 43a and the first excitation circuit 42a. An electric circuit 44b is provided between a source 43a2 of the first switching element 43a and an anode (ground) of the first power supply Vref1. An electric circuit 44c is provided between a gate 43a3 of the first switching element 43a and the first output terminal 41a4 of the first logic circuit 41a.

When the voltage applied to the first output terminal 41a4 of the first logic circuit 41a is at the high level (Hi), the voltage applied to the gate 43a3 of the first switching element 43a comes to be at the high level (Hi). A drain 43a1 and the source 43a2 of the first switching element 43a come to be in the conducted state. As a result, the first solenoid 42a1 is excited and the first parallel-off relay 15a comes to be in the closed state. On the other hand, when the voltage applied to the first output terminal 41a4 of the first logic circuit 41a is at the low level (Lo), the voltage applied to the gate 43a3 of the first switching element 43a comes to be at the low level (Lo). Accordingly, the drain 43a1 and the source 43a2 of the first switching element 43a are disconnected to be in the open state. As a result, the first solenoid 42a1 is not excited and the first parallel-off relay 15a comes to be in the open state.

Similarly, an electric circuit 44d is provided between a drain 43b1 of the second switching element 43b and the second excitation circuit 42b. An electric circuit 44e is provided between a source 43b2 of the second switching element 43b and an anode (ground) of the first power supply Vref1. An electric circuit 44f is provided between a gate 43b3 of the second switching element 43b and the second output terminal 41 b4 of the second logic circuit 41b.

When the voltage applied to the second output terminal 41b4 of the second logic circuit 41b is at the high level (Hi), the voltage applied to the gate 43b3 of the second switching element 43b comes to be at the high level (Hi). Accordingly, the drain 43b1 and the source 43b2 of the second switching element 43b come to be in the conducted state. As a result, the second solenoid 42b1 is excited and the second parallel-off relay 15b comes to be in the closed state. On the other hand, when the voltage applied to the second output terminal 41b4 of the second logic circuit 41b is at the low level (Lo), the voltage applied to the gate 43b3 of the second switching element 43b comes to be at the low level (Lo). The drain 43b1 and the source 43b2 of the second switching element 43b are disconnected to be in the open state. As a result, the second solenoid 42b1 is not excited and the second parallel-off relay 15b comes to be in the open state. The electric circuits 44c, 44f can include the driving circuits (the driver circuit), respectively.

The external monitoring device 50 is separately provided outside the arithmetical device 16a of the control unit 16. The external monitoring device 50 includes an arithmetical device that is the same or substantially the same as the arithmetical device 16a of the control unit 16. The arithmetical device of the external monitoring device 50 monitors the abnormality of the arithmetical device 16a. The abnormality of the arithmetical device 16a corresponds to, for example, the abnormality of the operation of control programs that control the converter 12 and the inverter 13, or the termination of the control programs. The external monitoring device 50 includes a power supply terminal 50a, a ground terminal 50b, a rectangular wave signal input terminal 50c and a restart signal output terminal 50d.

The power supply terminal 50a of the external monitoring device 50 is connected to a cathode of a second power supply Vref2. A first end of the ground terminal 50b is connected to an anode of the second power supply Vref2 and a second end of the ground terminal 50b is grounded. The power is supplied to the external monitoring device 50 via the electric supply terminal 50a and the ground terminal 50b. Similarly to the first power supply Vref1, for example, the second power supply Vref2 can be generated via the transformer that reduces the voltage of the output voltage (the DC voltage) of the converter 12.

The arithmetical device 16a includes a power supply terminal 16c, a ground terminal 16d, a rectangular wave signal output terminal 16e, a restart signal input terminal 16f and a second switch control terminal 16g. The power supply terminal 16c is connected to a cathode of the second power supply Vref2. A first end of the ground terminal 16d is connected to an anode of the second power supply Vref2 and a second end of the ground terminal 16d is grounded. The power is supplied to the arithmetical device 16a via the electric supply terminal 16c and the ground terminal 16d. The power is supplied to an internal monitoring device 16b in the same manner or substantially the same manner as the arithmetical device 16a.

An electric circuit 45a is provided between the rectangular wave signal output terminal 16e of the arithmetical device 16a of the control unit 16 and the rectangular wave signal input terminal 50c of the external monitoring device 50. The control unit 16 continuously transmits a constant rectangular wave signal that indicates that the arithmetical device 16a of the control unit 16 is normally operated to the external monitoring device 50 via the electric circuit 45a. The external monitoring device 50 receives the rectangular wave signal from the rectangular wave signal input terminal 50c.

The rectangular wave signal can be generated by, for example, the use of control programs (for example, a program that repeats the arithmetic processing at a constant cycle) of the converter 12 and the inverter 13. For example, the arithmetical device 16a of the control unit 16 inverts a rectangular wave signal when the arithmetic processing of the electric current is started. The arithmetical device 16a inverts the rectangular wave signal one more time (toggle operation) when the arithmetic processing of the electric current is completed. The arithmetical device 16a of the control unit 16 continuously generates the constant rectangular wave signal by the repetition of the inversion of the rectangular wave signal.

For example, the external monitoring device 50 determines that the arithmetical device 16a of the control unit 16 is normally operated when the external monitoring device 50 receives rectangular wave signal from the control unit 16 (the arithmetical device 16a) within a predetermine time. The external monitoring device 50 determines that the arithmetical device 16a of the control unit 16 is abnormal when the external monitoring device 50 does not receive rectangular wave signal from the control unit 16 (the arithmetical device 16a) within the predetermined time. As such, in a case where the external monitoring device 50 detects the abnormality of the arithmetical device 16a by whether the external monitoring device 50 receives the rectangular wave signal from the control unit 16 (the arithmetical device 16a) within the predetermined time, it is difficult for the external monitoring device 50 to detect the abnormality of the arithmetical device 16a when a frequency of the rectangular wave signal is higher than a normal frequency, or when a duty ratio of the rectangular wave signal is different from a normal duty ratio.

Here, the determination of the abnormality of the arithmetical device 16a of the control unit 16 is favorably operated by the external monitoring device 50 in a case where at least one of the frequency and the duty ratio of the rectangular wave signal received from the control unit 16 (the arithmetical device 16a) is out of a preset reference range. In particular, for example, the external monitoring device 50 detects a rising edge and a falling edge of a rectangular wave signal received from the control unit 16 (the arithmetical device 16a). The external monitoring device 50 calculates the frequency of the rectangular wave signal on the basis of an interval of the rising edges of the rectangular wave signal. The external monitoring device 50 calculates the duty ratio of the rectangular wave signal from an interval from the rising edge to the falling edge of the rectangular wave signal and the interval of the rising edges of the rectangular wave signal.

According to the embodiment, the external monitoring device 50 determines that the abnormality of the arithmetical device 16a of the control unit 16 is detected in a case where at least one of the frequency and the duty ratio of the rectangular wave signal received from the control unit 16 (the arithmetical device 16a) is out of a preset reference range. Thus, the detection accuracy of the abnormality of the arithmetical device 16 is enhanced in comparison with a case where the external monitoring device 50 detects the abnormality of the arithmetical device 16a by whether the external monitoring device 50 receives the rectangular wave signal from the control unit 16 (the arithmetical device 16a) within the predetermined time.

As shown in Fig. 2, an electric circuit 45b is provided between the restart signal output terminal 50d of the external monitoring device 50 and the restart signal input terminal 16f of the arithmetical device 16a. The electric circuit 45b is branched and is connected to an electric circuit 45c. The electric circuit 45c is provided between a branch point of the electric circuit 45b and the first input terminal 41a1 of the first logic circuit 41a. The electric circuit 45c is branched and is connected to the first input terminal 41b1 of the second logic circuit 41b.

When detecting the abnormality of the arithmetical device 16a of the control unit 16, the external monitoring device 50 generates a first opening command and outputs the first opening command to the switch driving circuit 40. The first opening command serves as an opening command for making the plural switches (the first and second parallel-off relays 15a, 15b) be in the open state or for opening the plural switches, the opening command that is generated by the external monitoring device 50. The external monitoring device 50 outputs the low level (Lo) voltage from the restart signal output terminal 50d when the external monitoring device 50 detects the abnormality of the arithmetical device 16a of the control unit 16 (the generation and output of the first opening command). The voltages applied to the electric circuits 45b, 45c come to be at the low level (Lo). Accordingly, the voltages applied to the first input terminals 41a1, 41 b1 of the first and second logic circuits 41a, 41b, respectively, come to be at the low level (Lo).

When the voltage applied to the first input terminal 41a1 of the first logic circuit 41a comes to be at the low level (Lo), the voltage applied to the first output terminal 41a4 of the first logic circuit 41a comes to be at the low level (Lo) regardless of the statuses of the second and third input terminal 41a2, 41a3. Then, the voltage applied to the gate 43a3 of the first switching element 43a comes to be at the low level (Lo). The drain 43a1 and the source 43a2 of the first switching element 43a are disconnected to be in the open state. As a result, the first solenoid 42a1 is not excited and the first parallel-off relay 15a comes to be in the open state.

Similarly, when the voltage applied to the first input terminal 41b1 of the second logic circuit 41b comes to be at the low level (Lo), the voltage applied to the second output terminal 41b4 of the second logic circuit 41b comes to be at the low level (Lo) regardless of the statuses of the second and third input terminals 41b2, 41b3. Then, the voltage applied to the gate 43b3 of the second switching element 43b comes to be at the low level (Lo). The drain 43b1 and the source 43b2 of the second switching element 43b are disconnected to be in the open state. As a result, the second solenoid 42b1 is not excited and the second parallel off relay 15b comes to be in the open state.

An electric circuit 45d is provided between the second switch control terminal 16g of the arithmetic device 16a and the second input terminal 41a2 of the first logic circuit 41a. The electric circuit 45d is branched and connected to the input terminal 41b2 of the second logic circuit 41b. When detecting the abnormality of the arithmetic device 16a of the control unit 16, the external monitoring device 50 generates the first opening command and outputs the first opening command to the switch driving circuit 40. At the same time, the external monitoring device 50 restarts the arithmetic device 16a of the control unit 16.

As such, when detecting the abnormality of the arithmetical device 16a of the control unit 16, the external monitoring device 50 outputs the low level (Lo) voltage from the restart signal output terminal 50d. Accordingly, the voltage applied to the electric circuit 45b comes to be at the low level (Lo). Then, the voltage applied to the restart signal input terminal 16f of the arithmetic device 16a comes to be at the low level (Lo). When the voltage applied to the restart signal input terminal 16f comes to be at the low level (Lo), the arithmetic device 16a of the control unit 16 is restarted.

The restarted arithmetic device 16a of the control unit 16 generates a second opening command and outputs the second opening command to the switch driving circuit 40. The second opening command serves as an opening command for making the plural switches (the first and second parallel-off relays 15a, 15b) be in the open state or for opening the plural switches (the first and second parallel-off relays 15a, 15b), the opening command that is generated by the arithmetic device 16a of the restarted control unit 16. When being restarted, the arithmetic device 16a of the control unit 16 outputs the low level (Lo) voltage from the second switch control terminal 16g (the generation and output of the second opening command). Thus, the voltage applied to the electric circuit 45d comes to be at the low level (Lo). The voltages applied to the second input terminal 41a2 of the first logic circuit 41a and the second input terminal 41b2 of the second logic circuit 41b come to be at the low level (Lo).

When the voltage applied to the second input terminal 41a2 of the first logic circuit 41a comes to be at the low level (Lo), the voltage applied to the first output terminal 41a4 of the first logic circuit 41a comes to be at the low level (Lo) regardless of the statuses of the first and third input terminals 41a1, 41a3. Then, the voltage applied to the gate 43a3 of the first switching element 43a comes to be at the low level (Lo). The drain 43a1 and the source 43a2 of the first switching element 43a are disconnected to be in the open state. As a result, the first solenoid 42a1 is not excited and the first parallel-off relay 15a comes to be in the open state.

Similarly, when the voltage applied to the second input terminal 41b2 of the second logic circuit 41b comes to be at the low level (Lo), the voltage applied to the second output terminal 41b4 of the second logic circuit 41b comes to be at the low level (Lo) regardless of the states of the first and third input terminals 41b1, 41b3. Then, the voltage applied to the gate 43b3 of the second switching element 43b comes to be at the low level (Lo). The drain 43b1 and the source 43b2 of the second switching element 43b are disconnected to be in the open state. As a result, the second solenoid 42b1 is not excited and the second parallel off relay 15b comes to be in the open state.

As such, when the abnormality occurs at the arithmetical device 16a of the control unit 16, the switch driving circuit 40 can maintain the plural switches (the first and second parallel-off relays 15a, 15b) in the open state while receiving at least one of the first and second opening commands. Accordingly, the switch driving circuit 40 releases the interconnection of the fuel cell 11 serving as the power generation device and the system power supply 20.

According to the system interconnection device 10 for the decentralized power supply of the embodiment, when the abnormality occurs at the arithmetical device 16a of the control unit 16, the switch driving circuit 40 can maintain the plural switches (the first and second parallel-off relays 15a, 15b) in the open state on the basis of the first opening command outputted with a command for restarting the arithmetical device 16a. Thus, the switch driving circuit 40 can release the interconnection of the fuel cell 11 serving as the power generation device and the system power supply 20, Accordingly, the switch driving circuit 40 can release the interconnection of the fuel cell 11 serving as the power generation device and the system power supply 20 before receiving the second opening command generated by the restarted arithmetical device 16a. Thus, comparing to a case where the release of the interconnection is operated in response to the second opening command only, the system interconnection device 10 for the embodiment can reduce time for releasing the interconnection.

When the abnormality occurs at the arithmetical device 16a of the control unit 16, the switch driving circuit 40 can release the interconnection of the fuel cell 11 serving as the power generation device and the system power supply 20 by at least one of the first and second opening commands. Thus, even in a case where the switch driving circuit 40 cannot receive one opening command, the switch driving circuit 40 can release the interconnection of the fuel cell 11 serving as the power generation device and the system power supply 20 by receiving the other opening command. That is, the system interconnection device 10 for the decentralized power supply of the embodiment serves as a redundant system that includes plural means for releasing the interconnection when the abnormality occurs at the arithmetical device 16a of the control unit 16. Thus, the reliability is enhanced.

The control unit 16 favorably further includes the internal monitoring device 16b that is positioned within the arithmetical device 16a and that monitors the abnormality of the arithmetical device 16a of the control unit 16. The internal monitoring device 16b may be configured by software. Alternatively, similarly to the external monitoring device 50, the internal monitoring device 16b may favorably be configured by hardware independently provided from the arithmetical device 16a. The internal monitoring device 16b is provided with a third switch control terminal 16h. An electric circuit 45e is provided between the third switch control terminal 16h of the internal monitoring device 16b and the third input terminal 41a3 of the first logic circuit 41a. The electric circuit 45e is branched and is connected to the input terminal 41b3 of the second logic circuit 41b.

When the internal monitoring device 16b detects the abnormality of the arithmetic device 16a of the control unit 16 and in a case where the external monitoring device 50 does not restart the arithmetic device 16a of the control unit 16, the internal monitoring device 16b restarts the arithmetic device 16a of the control unit 16. The internal monitoring device 16b can detect the abnormality of the arithmetic device 16a of the control unit 16 by the same means or substantially the same means of the external monitoring device 50.

When detecting the abnormality of the arithmetic device 16a of the control unit 16, the internal monitoring device 16b generates a third opening command and outputs the third opening command to the switch driving circuit 40. The third command serves as an opening command for making the plural switches (the first and second parallel-off relays 15a, 15b) be in the open state or for opening the plural switches, the opening command generated by the internal monitoring device 16b. When detecting the abnormality of the arithmetic device 16a of the control unit 16, the internal monitoring device 16b outputs the low level (Lo) voltage from the third switch control terminal 16h (the generation and output of the third opening command). Thus, the voltage applied to the electric circuit 45e comes to be at the low level (Lo). The voltages applied to the third input terminals 41a3, 41b3 of the first logic circuit 41a and the second logic circuit 41b, respectively, come to be at the low level (Lo).

When the voltage applied to the third input terminal 41a3 of the first logic circuit 41a comes to be at the low level (Lo), the voltage applied to the first output terminal 41a4 of the first logic circuit 41a comes to be at the low level (Lo) regardless of the states of the first and second input terminals 41a1, 41a2. Then, the voltage applied to the gate 43a3 of the first switching element 43a comes to be at the low level (Lo). The drain 43a1 and the source 43a2 of the first switching element 43a are disconnected to be in the open state. As a result, the first solenoid 42a1 is not excited and the first parallel off relay 15a comes to be in the open state.

Similarly, when the voltage applied to the third input terminal 41b3 of the second logic circuit 41b comes to be at the low level (Lo), the voltage applied to the second output terminal 41b4 of the second logic circuit 41b comes to be at the low level (Lo) regardless of the states of the first and second input terminals 41b1, 41b2. Then, the voltage applied to the gate 43b3 of the second switching element 43b comes to be at the low level (Lo). The drain 43b1 and the source 43b2 of the second switching element 43b are disconnected to be in the open state. As a result, the second solenoid 42b1 is not excited and the second parallel off relay 15b comes to be in the open state.

As such, when the abnormality occurs at the arithmetical device 16a of the control unit 16, the switch driving circuit 40 can maintain the plural switches (the first and second parallel-off relays 15a, 15b) in the open state while receiving at least one of the first, second and third opening commands. Accordingly, the switch driving circuit 40 releases the interconnection of the fuel cell 11 serving as the power generation device and the system power supply 20.

According to the system interconnection device 10 for the decentralized power supply of the embodiment, in a case where the external monitoring device 50 does not restart the arithmetic device 16a of the control unit 16, the internal monitoring device 16b restarts the arithmetic device 16a of the control unit 16. When the abnormality occurs at the arithmetical device 16a of the control unit 16, the switch driving circuit 40 can release the interconnection of the fuel cell 11 serving as the power generation device and the system power supply 20 by the third opening command generated by the internal monitoring device 16b in addition to the first and second opening commands. Accordingly, the system interconnection device 10 for the decentralized power supply of the embodiment serves as a redundant system that includes three means for releasing the interconnection when the abnormality occurs at the arithmetical device 16a of the control unit 16. Thus, the reliability is enhanced.

Meanwhile, the abnormality may occur at the arithmetic device 16a in accordance with a decrease of a power supply voltage supplied to the arithmetic device 16a of the control unit 16. For example, a dynamic random access memory or a DRAM that is a type of memory devices holds the information by storing an electrical charge in a condenser. Because the electrical charge stored in the condenser is reduced over time and the information held by electrical charge is eliminated, the DRAM is desired to have a refreshing operation that charges the condenser. At this time, in a case where the condenser does not perform the refreshing operation sufficiently due to the decrease of the power supply voltage supplied to the arithmetic device 16a, the information held by the DRAM may be changed. Accordingly, for example, the operation error or a shutdown of the control program may occur.

According to the embodiment, the power (the second power supply Vref2) is supplied to the external monitoring device 50 via the power supply terminal 50a and the ground terminal 50b. The power (the second power supply Vref2) is supplied to the arithmetic device 16a via the power supply terminal 16c and the ground terminal 16d. That is, the power from the common second power supply Vref2 is supplied to the external monitoring device 50 and the arithmetic device 16a of the control unit 16. The determination that the abnormality of the arithmetic device 16a of the control unit 16 is detected may be favorably operated when the power supply voltage supplied to the external monitoring device 50 via the power supply terminal 50a and the ground terminal 50b decreases below the reference voltage. The reference voltage corresponds to a lower limit of the power supply voltage at which the external monitoring device 50 and the arithmetic device 16a of the control unit 16 may operate normally. Thus, the external monitoring device 50 may detect the abnormality of the arithmetic device 16a in accordance with the decrease of the power supply voltage supplied to the arithmetic device 16a of the control unit 16.

The external monitoring device 50 may detect the abnormality of the arithmetic device 16a of the control unit 16 in conjunction with the frequency and the duty ratio of the rectangular wave signal received from the control unit 16 (the arithmetic device 16a). That is, in a case where at least one of the frequency and the duty ratio of the rectangular wave signal received from the control unit 16 (the arithmetic device 16a) and the power supply voltage supplied to the external monitoring device 50 is out of the reference range, the external monitoring device 50 may determine that the abnormality of the arithmetic device 16a of the control unit 16 is detected. The internal monitoring device 16b can detect the abnormality of the arithmetic device 16a of the control unit 16 by the same means or substantially the same means of the external monitoring device 50.

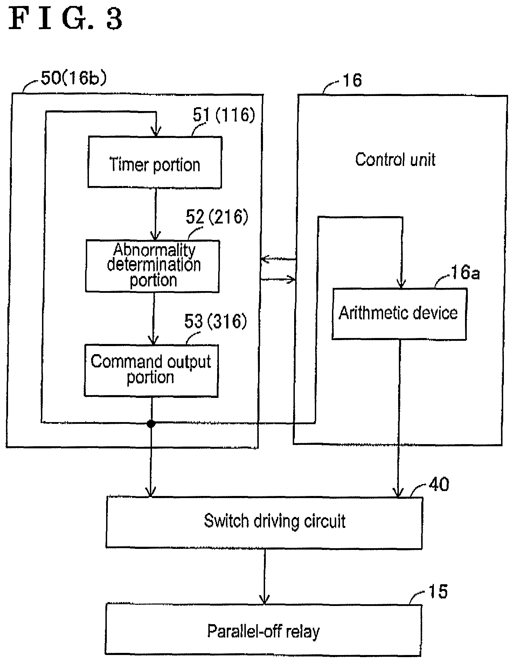

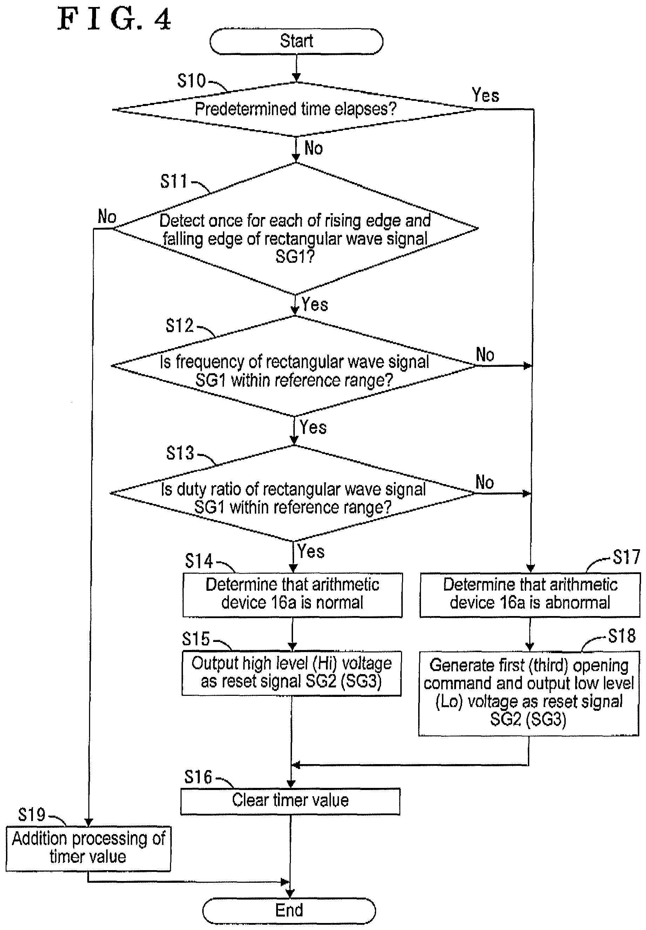

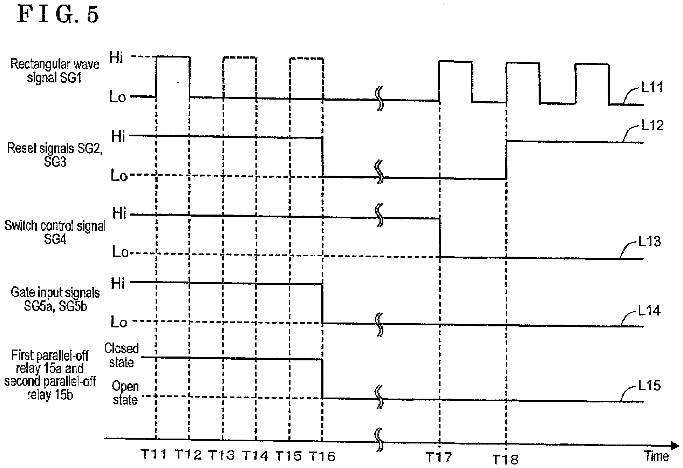

Next, a process for releasing the interconnection of the fuel cell 11 and the system power supply 20 by the switch driving circuit 40 by detecting the abnormality of the arithmetic device 16a of the control unit 16 by the external monitoring device 50 will be explained specifically with a reference to a block diagram shown in Fig. 3, a flow chart shown in Fig. 4 and a timing chart shown in Fig. 5. As shown in Fig. 3, the external monitoring device 50 is provided with a timer portion 51, an abnormality determination portion 52 and a command output portion 53 that are configured as a control block. The timer portion 51 corresponds to a known timer and measures a predetermined time (a constant time) repeatedly. The abnormality determination portion 52 determines whether the frequency and the duty ratio of the rectangular wave signal received from the control unit 16 (the arithmetic device 16a) are out of the reference ranges and detects the abnormality of the arithmetic device 16a of the control unit 16.

When the abnormality determination portion 52 detects the abnormality of the arithmetical device 16a of the control unit 16, the command output portion 53 generates the first opening command and outputs the first opening command to the switch driving circuit 40. Further, the command output portion 53 restarts the arithmetic device 16a of the control unit 16. In particular, the command output portion 53 outputs the low level (Lo) voltage from the restart signal output terminal 50d. The restarted arithmetic device 16a of the control device 16 generates the second opening command and outputs the second opening command to the switch driving device 40. On the other hand, when the abnormality determination portion 52 does not detect the abnormality of the arithmetic device 16a of the control unit 16, the command output portion 53 outputs the high level (Hi) voltage from the restart signal output terminal 50d. At this time, the arithmetic device 16a generates the opening command or the closing command on the basis of the control program and outputs the opening command or the closing command to the switch driving circuit 40.

The internal monitoring device 16b includes a control block that is the same or substantially the same as the control block of the external monitoring device 50. A timer portion 116 corresponds to the known timer and measures a predetermined time (a constant time) repeatedly. When an abnormality determination portion 216 of the internal monitoring device 16b detects the abnormality of the arithmetic device 16a of the control unit 16 and when the external monitoring device 50 does not restart the arithmetic device 16a of the control unit 16, a command output portion 316 of the internal monitoring device 16b restarts the arithmetic device 16a of the control unit 16. When the abnormality determination portion 216 of the internal monitoring device 16b detects the abnormality of the arithmetic device 16a of the control unit 16, the command output portion 316 of the internal monitoring device 16b generates the third opening command and outputs the third opening command to the switch driving circuit 40. In particular, when the abnormality of the arithmetic device 16a of the control device 16 is detected, the command output portion 316 of the internal monitoring device 16b outputs the low level (Lo) voltage from the third switch control terminal 16h.

When at least one of the abnormality determination portion 52 of the external monitoring device 50 and the abnormality determination portion 216 of the internal monitoring device 16b detects the abnormality of the arithmetic device 16a of the control unit 16, the switch driving circuit 40 maintains the plural switches (the first and second parallel-off relays 15a, 15b) in the open state while receiving at least one of the first, second and third opening commands. Then, the switch driving circuit 40 releases the interconnection of the fuel cell 11 serving as the power generation device and the system power supply 20. When each of the abnormality determination portion 52 of the external monitoring device 50 and the abnormality determination portion 216 of the internal monitoring device 16b does not detect the abnormality of the arithmetic device 16a of the control unit 16, the switch driving circuit 40 maintains the plural switches (the first and second parallel-off relays 15a, 15b) in the open state or in the closed state on the basis of the opening command or the closing command outputted from the arithmetic device 16a of the control unit 16. Then, the switch driving circuit 40 releases the interconnection of or interconnects the fuel cell 11 serving as the power generation device and the system power supply 20.

As shown in Fig. 2, a signal transmitted via the electric circuit 45a is referred to as a rectangular wave signal SG1. Signals transmitted via the electric circuits 45b and 45c are referred to as a reset signal SG2. A signal transmitted via the electric circuit 45e is referred to as a reset signal SG3. A signal transmitted via the electric circuit 45d is referred to as a switch control signal SG4. A signal transmitted via the electric circuit 44c is referred to as a gate input signal SG5a. A signal transmitted via the electric circuit 44f is referred to as a gate input signal SG5b.

As shown in Fig. 4, the timer portion 51 determines whether the predetermined time (the constant time) elapses (step S10). In a case where the predetermined time does not elapse (No in step S10), the control process proceeds to a next step, step S11. Then, the abnormality determination portion 52 determines whether the external monitoring device 50 detects once for each of the rising edge and the falling edge of the rectangular wave signal SG1 received from the control unit 16 (the arithmetic device 16a) (step S11). In a case where the external monitoring device 50 detects once for each of the rising edge and the falling edge of the rectangular wave signal SG1 received from the control unit 16 (Yes in step S11), the control process proceeds to a next step, step S12.

In step S12, the abnormality determination portion 52 determines whether the frequency of the rectangular wave signal SG1 is within the reference range. The abnormality determination portion 52 determines whether the frequency of the rectangular wave signal SG1 is within the reference range (within a range of a preset frequency) on the basis of, for example, an interval of the rising edges of the rectangular wave signal SG1 (an interval from an obtained rising edge to a following rising edge). In a case where the frequency of the rectangular wave signal SG1 is within the reference range (Yes in step S12), the control process proceeds to a next step, step S13.

In step S13, the abnormality determination portion 52 determines whether the duty ratio of the rectangular wave signal SG1 is within the reference range. The abnormality determination portion 52 determines whether the duty ratio of the rectangular wave signal SG1 is within the reference range (within a range of a preset duty ratio) on the basis of, for example, an interval between the rising edge and the falling edge of the rectangular wave signal SG1, and on the basis of an interval of the rising edges of the rectangular wave signal SG1 (the interval from the obtained rising edge to the following rising edge). In a case where the duty ratio of the rectangular wave signal SG1 is within the reference range (Yes in step S13), the control process proceeds to a next step, step S14.

In step S14, the abnormal determination portion 52 determines that the arithmetical device 16a is normal. Then, the control process proceeds to a next step, step S15. In step S15, the command output portion 53 outputs the high level (Hi) voltage as the reset signal SG2. That is, the command output portion 53 outputs the high level (Hi) voltage from the restart signal output terminal 50d. Then, the control process proceeds to a next step, step S16. In step S16, the timer portion 51 clears measured timer values and the routine is terminated. The control shown in Fig. 4 executes repeatedly by a cycle shorter than the predetermined time shown in step S10. The control shown in Fig. 4 serves as a program and is stored in the ROM that serves as the memory device of the external monitoring device 50.

In a case where the predetermined time elapses (Yes in step S10), the control process proceeds to step S17. In a case where the frequency of the rectangular wave signal SG1 is out of the reference range (No in step S12), the control process proceeds to step S17. In a case where the duty ratio of the rectangular wave signal SG1 is out of the reference range (No in step S13), the control process proceeds to step S17. In step S17, the abnormal determination portion 52 determines that the arithmetic device 16a is abnormal. Then, the control process proceeds to step S18. In step S18, the command output portion 53 generates the first opening command and outputs the low level (Lo) voltage as the reset signal SG2. That is, the command output portion 53 outputs the low level (Lo) voltage from the restart signal output terminal 50d. Then, the control process proceeds to step S16.

In a case where the abnormality determination portion 52 does not detect once for each of the rising edge and the falling edge of the rectangular wave signal SG1 (No in step S11), the control process proceeds to step S19. In step S19, the timer portion 51 operates an addition processing of the timer values. In such a case, because the external monitoring device 50 is in a reception state the rising edge and the falling edge of the rectangular wave signal SG1 from the control unit 16 (the arithmetical unit 16a), the timer portion 51 adds a predetermined value (that corresponds to a cycle when the control process shown in Fig. 4 is executed) and the routine is terminated. The internal monitoring device 16b detects the abnormality of the arithmetic device 16a by the same means or substantially the same means of the external monitoring device 50. The first opening command is read as the third opening command. The reset signal SG2 is read as the reset signal SG3.

In Fig. 5, a line L11 shows an example of the rectangular wave signal SG1 with the variation with time. A line L12 shows an example of the reset signals SG2, SG3 with the variation with time. A line L13 shows an example of the switch control signal SG4 with the variation with time. A line L14 shows an example of the gate input signals SG5a, SG5b with of the variation with time. A line L15 shows an example of the open state or the closed state of the first and second parallel-off relays 15a, 15b with the variation with time.

During a time from T11 to T13, the arithmetic device 16a of the control unit 16 is assumed to operate normally. The first and second parallel-off relays 15a, 15b are assumed to maintain in the closed state in accordance with the closing command generated by the arithmetic device 16a. The fuel cell 11 and the system power supply 20 are assumed to be interconnected. At this time, the frequency of the rectangular wave signal SG1 shown in the line L11 corresponds to a reciprocal of the time between T11 to T13. The duty ratio of the rectangular wave signal SG1 corresponds to a proportion of a time from T11 to T12 and the time from T11 to T13.

During the time from T11 to T13, because the arithmetic device 16a of the control unit 16 operates normally, the voltage applied to the reset signal SG2 is at the high level (hi). The voltage applied to the switch control signal SG4 is at the high level (Hi) by the arithmetic device 16a that generates the closing command. The voltages applied to each of the gate input signal SG5a, SG5b come to be at the high level (Hi) by the reset signal SG2 and the switch control signal SG4. The first and second parallel-off relays 15a, 15b come to be in the closed state.

Assuming that the external monitoring device 50 does not receive the rectangular wave signal SG1 from the control device 16 (the arithmetic device 16a) during a time from T13 to T15, the rectangular wave signal SG1 that should be received is shown in a dotted line in Fig. 5. The timer portion 51 of the external monitoring device 50 starts measuring time from T13 and determines that the predetermined time (that corresponds to the predetermined time shown in step S10 in Fig. 4) elapses at T16.

At this time, the abnormality determination portion 52 of the external monitoring device 50 determines that the arithmetic device 16a is abnormal (step S17 in Fig. 4). The command output portion 53 of the external monitoring device 50 generates the first opening command and changes the voltage applied to the reset signal SG2 from the high level (Hi) to the low level (Lo) (step S18 in Fig. 4). Accordingly, the voltages applied to each of the gate input signals SG5a, SG5b are changed from the high level (Hi) to the low level (Lo). The first and second parallel-off relays 15a, 15b are changed from the closed state to the open state and maintain in the open state. As a result, the interconnection of the fuel cell 11 and the system power supply 20 is released.

When the voltage applied to the reset signal SG2 is changed from the high level (Hi) to the low level (Lo) at T16, the arithmetic device 16a of the control unit 16 restarts. In a case where the arithmetic device 16a does not restart, the internal monitoring device 16b restarts the arithmetic device 16a. Accordingly, assuming that the arithmetic device 16a of the control device 16 restarts at T17, the restarted arithmetic device 16a of the control device 16 restarts the transmission of the rectangular wave signal SG1 to the external monitoring device 50. The restarted arithmetic device 16a of the control device 16 generates the second opening command and outputs the second opening command to the switch driving circuit 40. Thus, the voltage applied to the switch control signal SG4 is changed from the high level (Hi) to the low level (Lo).

Because the frequency and the duty ratio of the rectangular wave signal SG1 are within the reference range after T17 (from step S10 to step S13 in Fig. 4), the abnormality determination portion 52 of the external monitoring device 50 determines that the arithmetic device 16a is normal at T18 (step S14 in Fig. 4). The command output portion 53 of the external monitoring device 50 changes the voltage applied to the reset signal SG2 from the low level (Lo) to the high level (Hi) (step S15 in Fig. 4).

The first and second parallel-off relays 15a, 15b can maintain in the closed state in accordance with the closing command generated by the arithmetic device 16a after T18. The fuel cell 11 and the system power supply 20 can be interconnected. Meanwhile, the first and second parallel-off relays 15a, 15b can maintain in the open state in accordance with the opening command generated by the arithmetic device 16a after T18. The interconnection between the fuel cell 11 and the system power supply 20 can be released. The internal monitoring device 16b detects the abnormality of the arithmetic device 16a by the same means or substantially the same means of the external monitoring device 50. The first opening command is read as the third opening command. The reset signal SG2 is read as the reset signal SG3.

For example, this disclosure can be applied to a system interconnection device for a decentralized power source that interconnects or releases the interconnection of a power generation device and a system power supply of multiple phases (for example, three phases).

A system interconnection device (10) for a decentralized power supply includes an external monitoring device (50) being separately provided outside an arithmetic device (16a) of a control unit (16) and monitoring an abnormality of the arithmetic device (16a). When detecting the abnormality of the arithmetic device (16a) of the control unit (16), the external monitoring device (50) generates a first opening command for making a switch (15, 15a, 15b) be in the open state, the external monitoring device (50) outputs the first opening command to a switch driving circuit (40) and restarts the arithmetic device (16a) of the control unit (16). The restarted arithmetic device (16a) of the control unit (16) generates a second opening command for making the switch (15, 15a, 15b) be in the open state, and the arithmetic device (16a) outputs the second opening command to the switch driving circuit (40).

## Claims

1. A system interconnection device (10) for a decentralized power supply, comprising:
a power generation device (11) configured to generate a direct-current power;
an alternating-current system power supply (20);
a power converter (13) being positioned between the power generation device (11) and the system power supply (20), the power converter (13) configured to convert the direct-current power generated by the power generation device (11) into an alternating-current power and to output the alternating-current power to the system power supply (20);
an electric circuit (21, 22) configured to connect the power converter (13) and the system power supply (20);
a switch (15, 15a, 15b) being provided at the electric circuit (21, 22), the switch (15, 15a, 15b) configured to be switchable to an open state where the electric circuit (21, 22) is disconnected such that an interconnection of the power converter (13) and the system power supply (20) is released, and to be switchable to a closed state where the electric circuit (21, 22) is conductive such that the alternating-current power from the power converter (13) is output to the system power supply (20);
a switch driving circuit (40) configured to switch the switch (15, 15a, 15b) to the open state and to the closed state;
a control unit (16) including an arithmetic device (16a), the control unit (16) configured to generate an opening command for making the switch (15, 15a, 15b) be in the open state by the arithmetic device (16a), to generate a closing command for making the switch (15, 15a, 15b) be in the closed state by the arithmetic device (16a), and to output the opening command or the closing command to the switch driving circuit (40) by the arithmetic device (16a); and
an external monitoring device (50) being separately provided outside the arithmetic device (16a) of the control unit (16),
**characterized in that**
the external monitoring device (50) is configured to monitor whether an abnormality of the arithmetic device (16a) occurs,
when detecting the abnormality of the arithmetic device (16a) of the control unit (16), the external monitoring device (50) is configured to generate a first opening command for making the switch (15, 15a, 15b) be in the open state, to output the first opening command to the switch driving circuit (40), and to restart the arithmetic device (16a) of the control unit (16),
the restarted arithmetic device (16a) of the control unit (16) is configured to generate a second opening command for making the switch (15, 15a, 15b) be in the open state, and to output the second opening command to the switch driving circuit (40), and
the switch driving circuit (40) is configured to make the switch (15, 15a, 15b) be in the open state while receiving at least one of the first opening command and the second opening command.

2. The system interconnection device (10) for a decentralized power supply according to claim 1, wherein
the control unit (16) is configured to continuously transmit a constant rectangular wave signal to the external monitoring device (50), the constant rectangular wave signal indicating that the arithmetic device (16a) of the control unit (16) is normally operated; and
the external monitoring device (50) is configured to determine that the abnormality of the arithmetic device (16a) of the control unit (16) is detected when at least one of a frequency of the rectangular wave signal received from the control unit (16) and a duty ratio of the rectangular wave signal received from the control unit (16) is out of a preset reference range.

3. The system interconnection device (10) for a decentralized power supply according to either claim 1 or 2, wherein
the control unit (16) includes an internal monitoring device (16b) being positioned inside the arithmetic device (16a), the internal monitoring device (16b) configured to monitor whether the abnormality of the arithmetic device (16a) of the control unit (16) occurs;
when detecting the abnormality of the arithmetic device (16a) of the control unit (16), the internal monitoring device (16b) is configured to generate a third opening command for making the switch (15, 15a, 15b) be in the open state, to output the third opening command to the switch driving circuit (40), and to restart the arithmetic device (16a) of the control unit (16) in a state where the external monitoring device (50) does not restart the arithmetic device (16a) of the control unit (16); and
the switch driving circuit (40) is configured to make the switch (15, 15a, 15b) be in the open state while receiving at least one of the first opening command, the second opening command and the third opening command.

4. The system interconnection device (10) for a decentralized power supply according to claims 1 to 3, wherein each of the internal monitoring device (16b) and the external monitoring device (50) includes a timer portion (51, 116), an abnormality determination portion (52, 216) and a command output portion (53, 316).

## Patentansprüche

1. Systemverbindungsvorrichtung (10) für eine dezentralisierte Energieversorgung, mit:
einer Energieerzeugungseinrichtung (11), die konfiguriert ist zum Erzeugen von Gleichstromenergie;
einer Wechselstrom-Systemenergieversorgung (20);
einem Umrichter (13), der zwischen der Energieerzeugungseinrichtung (11) und der Systemenergieversorgung (20) positioniert ist, wobei der Umrichter (13) konfiguriert ist zum Wandeln der durch die Energieerzeugungseinrichtung (11) erzeugten Gleichstromenergie in Wechselstromenergie und zum Ausgeben der Wechselstromenergie an die Systemenergieversorgung (20);
einer elektrischen Schaltung (21, 22), die konfiguriert ist zum Verbinden des Umrichters (13) und der Systemenergieversorgung (20);
einem Schalter (15, 15a, 15b), der an der elektrischen Schaltung (21, 22) bereitgestellt ist, wobei der Schalter (15, 15a, 15b) konfiguriert ist, um in einen offenen Zustand schaltbar zu sein, in dem die elektrische Schaltung (21, 22) unterbrochen ist, sodass eine Verbindung des Umrichters (13) und der Systemenergieversorgung (20) gelöst ist, und in einen geschlossenen Zustand schaltbar zu sein, in dem die elektrische Schaltung (21, 22) leitend ist, sodass die Wechselstromenergie von dem Umrichter (13) an die Systemenergieversorgung (20) ausgegeben wird;
einer Schalteransteuerschaltung (40), die konfiguriert ist zum Schalten des Schalters (15, 15a, 15b) in den offenen Zustand und den geschlossenen Zustand;
einer Steuereinheit (16) mit einer Arithmetikeinrichtung (16), wobei die Steuereinheit (16) konfiguriert ist zum Erzeugen eines Öffnungsbefehls zum Bewirken, dass der Schalter (15, 15a, 15b) in dem offenen Zustand ist, durch die Arithmetikeinrichtung (16a), zum Erzeugen eines Schließbefehls zum Bewirken, dass der Schalter (15, 15a, 15b) in dem geschlossenen Zustand ist, durch die Arithmetikeinrichtung (16), und zum Ausgeben des Öffnungsbefehls oder des Schließbefehls an die Schalteransteuerschaltung (40) durch die Arithmetikeinrichtung (16a); und
einer externen Überwachungseinrichtung (50), die außerhalb der Arithmetikeinrichtung (16a) der Steuereinheit (16) separat bereitgestellt ist,
**dadurch gekennzeichnet, dass**
die externe Überwachungseinrichtung (50) konfiguriert ist zum Überwachen, ob eine Unregelmäßigkeit der Arithmetikeinrichtung (16a) auftritt,
wenn die Unregelmäßigkeit der Arithmetikeinrichtung (16a) der Steuereinheit (16) detektiert wird, die externe Überwachungseinrichtung (50) konfiguriert ist zum Erzeugen eines ersten Öffnungsbefehls zum Bewirken, dass der Schalter (15, 15a, 15b) in dem offenen Zustand ist, zum Ausgeben des ersten Öffnungsbefehls an die Schalteransteuerschaltung (40), und zum Neustarten der Arithmetikeinrichtung (16a) der Steuereinheit (16),
die neugestartete Arithmetikeinrichtung (16a) der Steuereinheit (16) konfiguriert ist zum Erzeugen eines zweiten Öffnungsbefehls zum Bewirken, dass der Schalter (15, 15a, 15b) in dem offenen Zustand ist, und zum Ausgeben des zweiten Öffnungsbefehls an die Schalteransteuerschaltung (40), und
die Schalteransteuerschaltung (40) konfiguriert ist zum Bewirken, dass der Schalter (15, 15a, 15b) in dem offenen Zustand ist, während zumindest einer des ersten Öffnungsbefehls und des zweiten Öffnungsbefehls empfangen wird.

2. Systemverbindungvorrichtung (10) für eine dezentralisierte Energieversorgung gemäß Anspruch 1, wobei
die Steuereinheit (16) konfiguriert ist zum kontinuierlichen Übertragen eines konstanten Rechteckwellensignals an die externe Überwachungseinrichtung (50), wobei das konstante Rechteckwellensignal bezeichnet, dass die Arithmetikeinrichtung (16a) der Steuereinheit (16) normal arbeitet; und
die externe Überwachungseinrichtung (50) konfiguriert ist zum Bestimmen, dass die Unregelmäßigkeit der Arithmetikeinrichtung (16a) der Steuereinheit (16) detektiert wird, wenn zumindest eines von einer Frequenz des von der Steuereinheit (16) empfangenen Rechteckwellensignals und einem Tastverhältnis des von der Steuereinheit (16) empfangenen Rechteckwellensignals außerhalb eines voreingestellter Referenzbereichs liegt.

3. Systemverbindungvorrichtung (10) für eine dezentralisierte Energieversorgung gemäß Anspruch 1 oder 2, wobei
die Steuereinheit (16) eine interne Überwachungseinrichtung (16b) umfasst, die innerhalb der Arithmetikeinrichtung (16a) positioniert ist, wobei die interne Überwachungseinrichtung (16b) konfiguriert ist zum Überwachen, ob die Unregelmäßigkeit der Arithmetikeinrichtung (16a) der Steuereinheit (16) auftritt;
wenn die Unregelmäßigkeit der Arithmetikeinrichtung (16a) der Steuereinheit (16) detektiert wird, die interne Überwachungseinrichtung (16b) konfiguriert ist zum Erzeugen eines dritten Öffnungsbefehls zum Bewirken, dass der Schalter (15, 15a, 15b) in dem offenen Zustand ist, zum Ausgeben des dritten Öffnungsbefehls an die Schalteransteuerschaltung (40), und zum Neustarten der Arithmetikeinrichtung (16a) der Steuereinheit (16) in einem Zustand, in dem die externe Überwachungseinrichtung (50) die Arithmetikeinrichtung (16a) der Steuereinheit (16) nicht neustartet; und
die Schalteransteuerschaltung (40) konfiguriert ist zum Bewirken, dass der Schalter (15, 15a, 15b) in dem offenen Zustand ist, während zumindest einer des ersten Öffnungsbefehls, des zweiten Öffnungsbefehls und des dritten Öffnungsbefehls empfangen wird.

4. Systemverbindungsvorrichtung (10) für eine dezentralisierte Energieversorgung gemäß Ansprüche 1 bis 3, wobei jede der internen Überwachungseinrichtung (16b) und der externen Überwachungseinrichtung (50) einen Zeitgeberabschnitt (51, 116), einen Unregelmäßigkeitsbestimmungsabschnitt (52, 216) und einen Befehlsausgabeabschnitt (53, 316) umfasst.

## Revendications

1. Dispositif d'interconnexion de système (10) destiné à une alimentation électrique décentralisée, comprenant :
un dispositif de génération d'énergie (11) configuré pour générer un courant continu ;
une alimentation en courant alternatif de système (20) ;
un convertisseur de puissance (13) positionné entre le dispositif de génération d'énergie (11) et l'alimentation électrique de système (20), le convertisseur de puissance (13) étant configuré pour convertir le courant continu généré par le dispositif de génération d'énergie (11) en un courant alternatif et pour délivrer le courant alternatif à l'alimentation électrique de système (20) ;
un circuit électrique (21, 22) configuré pour relier le convertisseur de puissance (13) et l'alimentation électrique de système (20) ;
un commutateur (15, 15a, 15b) prévu au niveau du circuit électrique (21, 22), le commutateur (15, 15a, 15b) étant configuré pour être commuté dans un état ouvert dans lequel le circuit électrique (21, 22) est déconnecté de sorte qu'une interconnexion du convertisseur de puissance (13) et de l'alimentation électrique de système (20) soit libérée, et pour être commuté dans un état fermé dans lequel le circuit électrique (21, 22) est conducteur de sorte que le courant alternatif qui provient du convertisseur de puissance (13) soit délivré à l'alimentation de système (20) ;
un circuit de commande de commutateur (40) configuré pour faire passer le commutateur (15, 15a, 15b) à l'état ouvert et à l'état fermé ;
une unité de commande (16) comprenant un dispositif arithmétique (16a), l'unité de commande (16) étant configurée pour générer une commande d'ouverture destinée à faire passer le commutateur (15, 15a, 15b) à l'état ouvert par le dispositif arithmétique (16a), pour générer une commande de fermeture destinée à faire passer le commutateur (15, 15a, 15b) à l'état fermé par le dispositif arithmétique (16a), et pour délivrer la commande d'ouverture ou la commande de fermeture au circuit de commande de commutateur (40) par le dispositif arithmétique (16a) ; et
un dispositif de surveillance externe (50) étant prévu séparément à l'extérieur du dispositif arithmétique (16a) de l'unité de commande (16),
**caractérisé en ce que**
le dispositif de surveillance externe (50) est configuré pour surveiller si une anomalie du dispositif arithmétique (16a) se produit,
en cas de détection de l'anomalie du dispositif arithmétique (16a) de l'unité de commande (16), le dispositif de surveillance externe (50) est configuré pour générer une première commande d'ouverture destinée faire passer le commutateur (15, 15a, 15b) à l'état ouvert, pour délivrer la première commande d'ouverture au circuit de commande de commutateur (40), et pour redémarrer le dispositif arithmétique (16a) de l'unité de commande (16),
le dispositif arithmétique redémarré (16a) de l'unité de commande (16) est configuré pour générer une deuxième commande d'ouverture destinée à faire passer le commutateur (15, 15a, 15b) à l'état ouvert, et pour délivrer la deuxième commande d'ouverture au circuit de commande de commutateur (40), et
le circuit de commande de commutateur (40) est configuré pour faire passer le commutateur (15, 15a, 15b) à l'état ouvert tout en recevant au moins l'une de la première commande d'ouverture et de la deuxième commande d'ouverture.

2. Dispositif d'interconnexion de système (10) destiné à une alimentation électrique décentralisée selon la revendication 1, dans lequel
l'unité de commande (16) est configurée pour transmettre en continu un signal à onde rectangulaire constant au dispositif de surveillance externe (50), le signal à onde rectangulaire constant indiquant que le dispositif arithmétique (16a) de l'unité de commande (16) fonctionne normalement ; et
le dispositif de surveillance externe (50) est configuré pour déterminer que l'anomalie du dispositif arithmétique (16a) de l'unité de commande (16) est détectée lorsqu'au moins l'un d'une fréquence du signal à onde rectangulaire reçu de la part de l'unité de commande (16) et d'un taux de fonctionnement du signal à onde rectangulaire reçu de la part de l'unité de commande (16) se trouve en-dehors de valeurs de référence prédéfinies.

3. Dispositif d'interconnexion de système (10) destiné à une alimentation électrique décentralisée selon la revendication 1 ou 2, dans lequel
l'unité de commande (16) comprend un dispositif de surveillance interne (16b) positionné à l'intérieur du dispositif arithmétique (16a), le dispositif de surveillance interne (16b) étant configuré pour surveiller si l'anomalie du dispositif arithmétique (16a) de l'unité de commande (16) se produit ;
en cas de détection de l'anomalie du dispositif arithmétique (16a) de l'unité de commande (16), le dispositif de surveillance interne (16b) est configuré pour générer une troisième commande d'ouverture destinée à faire passer le commutateur (15, 15a, 15b) à l'état ouvert, pour délivrer la troisième commande d'ouverture au circuit de commande de commutateur (40), et pour redémarrer le dispositif arithmétique (16a) de l'unité de commande (16) dans un état dans lequel le dispositif de surveillance externe (50) ne redémarre pas le dispositif arithmétique (16a) de l'unité de commande (16) ; et
le circuit de commande de commutateur (40) est configuré pour faire passer le commutateur (15, 15a, 15b) à l'état ouvert tout en recevant au moins l'une de la première commande d'ouverture, de la deuxième commande d'ouverture et de la troisième commande d'ouverture.

4. Dispositif d'interconnexion de système (10) destiné à une alimentation électrique décentralisée selon les revendications 1 à 3, dans lequel chacun du dispositif de surveillance interne (16b) et du dispositif de surveillance externe (50) comprend une partie de minuterie (51, 116), une partie de détermination d'anomalie (52, 216), et une partie de délivrance de commande (53, 316).
